Europäisches Patentamt

European Patent Office

Office européen des brevets

(11) Veröffentlichungsnummer : **0 424 811 B1**

## (12) EUROPÄISCHE PATENTSCHRIFT

(45) Veröffentlichungstag der Patentschrift :
22.07.92 Patentblatt 92/30

(51) Int. Cl.⁵ : **E01B 27/17**

(21) Anmeldenummer : **90120028.7**

(22) Anmeldetag : **19.10.90**

(54) **Bezugsystem für Gleisbaumaschinen.**

(30) Priorität : **25.10.89 AT 2466/89**

(43) Veröffentlichungstag der Anmeldung :
**02.05.91 Patentblatt 91/18**

(45) Bekanntmachung des Hinweises auf die
Patenterteilung :
**22.07.92 Patentblatt 92/30**

(84) Benannte Vertragsstaaten :
**BE CH DE ES FR GB IT LI NL SE**

(56) Entgegenhaltungen :
**DE-A- 2 065 134**
**US-A- 4 311 411**
**US-A- 4 841 136**

(73) Patentinhaber : **Franz Plasser**
**Bahnbaumaschinen- Industriegesellschaft**
**m.b.H.**
**Johannesgasse 3**
**A-1010 Wien (AT)**

(72) Erfinder : **Theurer, Josef**
**Johannesgasse 3**
**A-1010 Wien (AT)**

(74) Vertreter : **Rau, Manfred, Dr. Dipl.-Ing. et al**
**Rau & Schneck, Patentanwälte Königstrasse 2**
**W-8500 Nürnberg 1 (DE)**

EP 0 424 811 B1

## Beschreibung

Die Erfindung betrifft ein Bezugsystem für Gleisbaumaschinen, insbesondere Gleisstopfmaschinen, zur höhen- und/oder seitenmäßigen Steuerung von Arbeitsaggregaten mit einem von der Maschine im Abstand angeordneten und über eine Funk-Fernsteuerung unabhängig verfahrbaren, einen Sender für einen auf die Maschine gerichteten Leitstrahl aufweisenden Vorwagen und mit einem auf der Maschine angeordneten, maschineneigenen Bezugsystem, dem ein mit der Maschine verbundener Empfänger für den Leitstrahl zugeordnet ist.

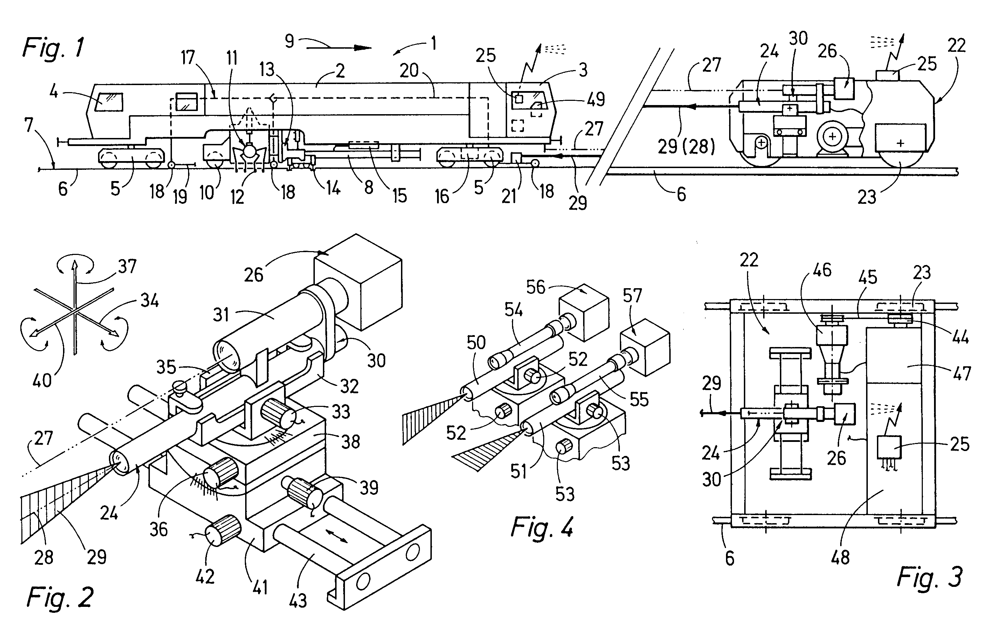

Es ist - gemäß DE-OS 20 65 134 - bereits ein derartiges Bezugsystem für Gleisstopfmaschinen bekannt. Dieses besteht aus einem maschineneigenen, durch gespannte und sich vom hintersten zum vordersten Fahrwerk erstreckende Meßsehnen gebildeten Bezugsystem, dem ein als Bezugsbasis dienender Laser-Leitstrahl seitlich zugeordnet ist. Dieser Leitstrahl wird durch einen am hintersten Fahrwerk der Maschine angeordneten Laser-Sender gebildet, der zum Einvisieren auf einen Empfänger fernsteuerbar ausgebildet ist. Der als Zielelement für den Leitstrahl dienende Empfänger befindet sich im vorderen Endbereich der Maschine und ist mit Hilfe eines Spindelantriebes zur Einstellung auf einen Festpunkt querverstellbar. Der Bedienungsmann der Maschine kann das Einvisieren über ein Fernseh-Aufnahmegerät und Wiedergabegerät durchführen. Entsprechend einer weiteren, in Fig.1 dargestellten Variante ist der Stopfmaschine ein Vorwagen in Arbeitsrichtung vorgeordnet, der einen Laser-Sender und ein Zielfernrohr aufweist, mit dessen Hilfe der durch den Sender gebildete Leitstrahl auf den mit der Maschine verbundenen Empfänger einstellbar ist. Ein am Vorwagen vorgesehener Antrieb ist über ein Funkgerät fernsteuerbar. Dieses bekannte Bezugsystem weist jedoch den Nachteil auf, daß eine Bedienungsperson von der Stopfmaschine zum Vorwagen vorgehen muß, um die Einstellung des Senders auf den Empfänger vornehmen zu können.

Die Aufgabe der vorliegenden Erfindung besteht nun in der Schaffung eines Bezugsystems der eingangs beschriebenen Art, bei welchem eine vereinfachte und raschere Einstellung des am Vorwagen angeordneten Senders auf den Empfänger möglich ist.

Dies wird erfindungsgemäß dadurch erreicht, daß am Vorwagen eine Fernsehkamera angeordnet ist und diese sowie der Sender über durch die Funk-Fernsteuerung beaufschlagbare Antriebe verschwenkbar ausgebildet sind und daß auf der Maschine die Funk-Fernsteuerung und ein mit der Fernsehkamera in Verbindung stehender Monitor vorgesehen sind. Mit der Anordnung einer fernsteuerbaren Fernsehkamera auf dem Vorwagen ist in besonders vorteilhafter Weise eine rasche und präzise Anvisierung des im Bereich der Maschinenvorderseite angeordneten Empfängers möglich, ohne daß eine Bedienungsperson unter entsprechendem Zeitaufwand zum Vorwagen gehen und die Einstellung manuell durchführen muß. Damit wird die nach einem entsprechenden Arbeitsfortschritt der Stopfmaschine in bestimmten Zeitabständen immer wieder erforderliche Vorverlegung des Vorwagens und Neueinstellung des Senders wesentlich verkürzt, so daß die daraus resultierende Unterbrechung des Stopfvorganges auf ein Minimum reduzierbar ist. Die in der Bedienungskabine der Stopfmaschine befindliche Bedienungsperson kann nunmehr bereits unmittelbar nach Beendigung des letztmöglichen Stopfvorganges den Vorwagen ferngesteuert auf die gewünschte Distanz von etwa 400 m vorfahren und danach sofort - unter genauer Beobachtung des Empfängers und entsprechender Anpeilhilfen auf dem Monitor - den Sender einstellen. In diesem Zusammenhang ist auch von besonderem Vorteil, daß infolge der Einstellmöglichkeit des Senders innerhalb der Fahrkabine eine Sicherheitsgefährdung der Bedienungsperson, insbesondere durch den Gefahrenbereich eines Nachbargleises, zur Gänze ausgeschlossen ist. Außerdem steht die Bedienungsperson, die bisher die weiteste Anfangsdistanz zwischen Maschine und Vorwagen zweimal zurücklegen mußte, durch die Zeiteinsparung in einem größeren Ausmaß für andere Arbeiten während des Stopfvorganges zur Verfügung.

Gemäß einer bevorzugten Weiterbildung der Erfindung ist die Fernsehkamera mit dem am Vorwagen angeordneten und zur Ausstrahlung eines Laser-Strahles ausgebildeten Sender zu einer baulichen Einheit verbunden. Durch eine derartige Verbindung von Fernsehkamera und Sender ist mit einer entsprechenden Verschwenkung des Senders für das Anpeilen des Empfängers automatisch auch eine entsprechende Verschwenkbewegung der Fernsehkamera für eine genaue Beobachtung des Empfängers bzw. der Anpeilhilfen gegeben.

Gemäß einer weiteren Erfindungsvariante ist vorgesehen, daß die optischen Achsen von Fernsehkamera und Sender parallel zueinander ausgerichtet sind. Damit ist sichergestellt, daß der ferngesteuerte Anpeilvorgang unabhängig von der Distanz zwischen Maschine und Vorwagen raschest durchführbar ist.

Der mit der Fernsehkamera zu einer baulichen Einheit verbundene Sender ist entsprechend einer anderen vorteilhaften Variante der Erfindung über wenigstens drei durch die Funk-Fernsteuerung unabhängig voneinander beaufschlagbare Antriebe um drei zueinander jeweils etwa senkrechte Achsen verschwenkbar ausgebildet. Eine derartige vielfach verschwenkbare Ausbildung ermöglicht - unabhängig von den im Bereich des Vorwagens vorliegenden Gleislagefehlern - eine exakte fernsteuerbare Einstellung des Senders auf den Empfänger.

Es besteht noch eine weitere vorteilhafte Ausbildung der Erfindung darin, daß die durch Sender und Fernsehkamera gebildete und mit den Schwenk-Antrieben verbundene bauliche Einheit auf einem Schlitten gelagert ist, der durch einen fernsteuerbaren Antrieb auf quer zur Gleislängsrichtung verlaufenden Führungen verschiebbar ist. Mit einer derartigen Ausbildung ist die gesamte, durch Sender, Verschwenk-Antriebe und Fernsehkamera gebildete Einheit genau in der gewünschten Querlage ferngesteuert positionierbar.

Gemäß einer weiteren Variante der Erfindung kann die Fernsehkamera in Blickrichtung vor einem mit dem Sender verbundenen Zielfernrohr angeordnet sein. Damit sind in vorteilhafter Weise bereits im Einsatz befindliche Laser-Sender mit Zielfernrohren für eine erfindungsgemäße fernsteuerbare Anpeilung umrüstbar. Außerdem besteht die Möglichkeit, im Falle eines kurzzeitigen Ausfalls beispielsweise des Monitors oder der Fernsehkamera eine manuelle Anpeilung über das Zielfernrohr durchzuführen.

Schließlich ist noch gemäß einer weiteren Ausbildung der Erfindung vorgesehen, daß zwei Sender mit jeweils einer eigenen Fernsehkamera am Vorwagen angeordnet sind, wobei die Sender mitsamt den zugeordneten Fernsehkameras mittels eigener, über die Funk-Fernsteuerung beaufschlagbarer Antriebe unabhängig voneinander verschwenkbar ausgebildet sind. Eine derartige Zweifach-Anordnung einer jeweils durch Sender und Fernsehkamera gebildeten Einheit ermöglicht eine voneinander getrennte Einstellung des vorderen Endpunktes des Nivellierbezugsystems und des Richtbezugsystems.

Im folgenden wird die Erfindung an Hand zweier in der Zeichnung dargestellter Ausführungsbeispiele näher beschrieben.

Es zeigen:

Fig.1 eine Seitenansicht einer Gleisstopfmaschine mit einem maschineneigenen Bezugsystem, der ein vergrössert dargestellter Vorwagen mit einem Laser-Sender und einer fernsteuerbaren Fernsehkamera vorgeordnet ist,

Fig.2 eine räumliche Darstellung der mit dem Laser-Sender verbundenen und am Vorwagen angeordneten Fernsehkamera,

Fig.3 eine Draufsicht auf den Vorwagen gemäß Fig. 1 und

Fig. 4 ein weiteres Ausführungsbeispiel der Erfindung, wobei zwei Laser-Sender mit jeweils einer eigenen, fernsteuerbaren Fernsehkamera vorgesehen sind.

Eine in Fig. 1 ersichtliche und im Arbeitseinsatz kontinuierlich verfahrbare Gleisstopfmaschine 1 weist einen langgestreckten Maschinenrahmen 2 auf, der endseitig im Bereich von Fahr- bzw. Arbeitskabinen 3,4 über Drehgestell-Fahrwerke 5 auf einem aus Schwellen und Schienen 6 gebildeten Gleis 7 abstützbar ist. Zwischen den beiden Fahrwerken 5 befindet sich ein Aggregatrahmen 8, der mit seinem in Arbeitsrichtung - durch Pfeil 9 angedeutet - vorderen Ende längsverschiebbar am Maschinenrahmen 2 gelagert ist, während das hintere Ende über ein Stütz- und Führungsfahrwerk 10 auf den beiden Schienen 6 abgestützt ist. Diesem mit einem eigenen Fahrantrieb versehenen Stütz- und Führungsfahrwerk 10 ist ein höhenverstellbares Zweischwellen-Stopfaggregat 11 mit über Antriebe beistell- und vibrierbaren Stopfwerkzeugen 12 unmittelbar vorgeordnet. Zur Anhebung und Ausrichtung des Gleises 7 in die Soll-Lage ist des weiteren ein mit Hebe- und Richtantrieben verbundenes Gleis-Hebe-Richtaggregat 13 höhen- und seitenverstellbar am Aggregatrahmen 8 gelagert, das zur Erfassung des Gleises 7 an die Schienen 6 anlegbare Heberollen 14 aufweist. Der gesamte Aggregatrahmen 8 ist mitsamt dem Stopf- und Gleis-Hebe-Richtaggregat 11,13 mittels eines Antriebes 15 schrittweise von Stopf- zu Stopfstelle längsverschiebbar, während der Maschinenrahmen 2 mit Hilfe eines Fahrantriebes 16 kontinuierlich in der durch den Pfeil 9 dargestellten Arbeitsrichtung verfahrbar ist.

Zur Erfassung der Differenz zwischen Gleis-Ist- und Gleis-Soll-Lage ist ein maschineneigenes Bezugsystem 17 mit auf den Schienen 6 abrollbaren Meßachsen 18 vorgesehen. Diese sind zur Erfassung der Seiten- bzw. Höhenlagefehler mit Richt- bzw. Nivellier-Meßsehnen 19, 20 verbunden. Im Bereich der vordersten Meßachse 18 ist ein Laser-Empfänger 21 angeordnet. Der Gleisstopfmaschine 1 ist ein unabhängig von dieser verfahrbarer und in Arbeitsrichtung vorgeordneter Vorwagen 22 mit Spurkranzrädern 23 zugeordnet. An diesem mit einem Laser-Sender 24 verbundenen Vorwagen 22 ist eine über eine Funk-Fernsteuerung 25, deren Empfangsteil am Vorwagen 22 und Funkteil in der Fahrkabine 3 vorgesehen ist, fernsteuerbare Fernsehkamera 26 angeordnet. Die optischen Achsen 27,28 von Fernsehkamera 26 und Laser-Sender 24 sind dabei parallel zueinander ausgerichtet. Wie insbesondere auch in den Fig.2 und 3 ersichtlich, ist die Fernsehkamera 26 mit dem am Vorwagen 22 angeordneten und zur Ausstrahlung eines durch eine spezielle Optik in eine vertikale Ebene aufgefächerten Laser-Strahles 29 ausgebildeten Laser-Sender 24 zu einer baulichen Einheit 30 verbunden. Der Fernsehkamera 26 ist ein über die Funk-Fernsteuerung 25 fernsteuerbares Tele-Objektiv 31 vor- bzw. zugeordnet. Ein die durch die Fernsehkamera 26 und den Laser-Sender 24 gebildete bauliche Einheit 30 festhaltender Träger 32 ist mit Hilfe eines Antriebes 33 um eine senkrecht zur Maschinenlängsrichtung verlaufende Achse 34 verschwenkbar auf einer Konsole 35 gelagert. Diese ist mittels eines Antriebes 36 um eine weitere, senkrecht zur Gleisebene und zur Achse 34 verlaufende Schwenk-Achse 37 verdrehbar. Zusätzlich ist ein die Konsole 35 lagernder Drehtisch 38 als Goniometer ausgebildet und über einen Antrieb 39 um eine weitere, zu den beiden optischen Achsen 27,28 parallel bzw. zu den Achsen 34,37 senkrecht verlaufende Achse 40 verschwenkbar. Die gesamte bauliche Einheit 30 ist auf einem Schlitten 41 gelagert, der mit Hilfe eines weiteren Antriebes 42 auf quer zur Gleislängsrichtung verlaufenden Führungen 43 querverschiebbar ist. Sämtliche Antriebe 33,36,39 und 42 sind über die Funk-Fernsteuerung 25 von der Fahrkabine 3 aus fernsteuerbar. Wie insbesondere in Fig.3 dargestellt, ist eine Radachse 44 des Vorwagens 22 durch einen Keilriemen 45 und einen ebenfalls fernsteuerbaren Elektromotor 46 mit einer Viskose-Kupplung antreibbar. Die Stromversorgung dieses Elektromotors 46 erfolgt über eine Batterie 47, deren Aufladung während der Überstellfahrt mit Hilfe einer eigenen Lichtmaschine durchgeführt wird. Die Energieversorgung des Laser-Senders 24 und des Empfangsteiles der Funk-Fernsteuerung 25 erfolgt über eine weitere Batterie 48.

Vor Beginn des Arbeitseinsatzes der Gleisstopfmaschine 1 wird der Elektromotor 46 des Vorwagens 22 mit Hilfe des in der Arbeits-bzw. Fahrkabine 3 befindlichen Funkteiles der Funk-Fernsteuerung 25 in Betrieb gesetzt. Die damit eingeleitete Vorfahrt des Vorwagens 22 wird nach einer Distanz von etwa 400 m zur Stopfmaschine 1 durch ferngesteuertes Bremsen beendet, wonach die querverschiebbaren Spurkranzräder 23 zur Ausschltung des Spurspieles ebenfalls ferngesteuert an die Schienenkopf-Innenflanken angepreßt werden. Als nächstes wird der Laser-Sender 24 unter entsprechender ferngesteuerter Beaufschlagung der Antriebe 33,36,39 und 42 derart auf den Empfänger 21 eingestellt, daß der in eine vertikale Ebene aufgefächerte Laser-Strahl 29 genau auf den maschinenseitigen Empfänger 21 auftrifft. Dieser Anpeilvorgang kann über die Fernsehkamera 26 und einen in der Fahr- bzw. Arbeitskabine 3 befindlichen Monitor 49 genau beobachtet werden, wobei durch auf der Stopfmaschine 1 angeordnete Anpeilhilfen, z.B. Visiertafeln od. dgl., der anfängliche Anpeilvorgang erleichtert wird. Der exakt auf den Empfänger 21 eingerichtete Laser-Strahl 29 steuert während der Arbeitsvorfahrt der Gleisstopfmaschine 1 automatisch die Lage der vorderen Bezugspunkte des maschineneigenen Bezugsystems 17 in der durch den Laser-Strahl vorgegebenen vertikalen Ebene. Dieses Laser-Richt- und gegebenenfalls Nivelliersystem eignet sich besonders für Schnellfahrstrecken, auf denen eine immer größere Präzision der Gleislage gefordert wird. Sobald die kontinuierlich vorfahrende Gleisstopfmaschine 1 mit zyklischer Unterstopfung des Gleises 7 den stillstehenden Vorwagen 22 erreicht hat, wird über die Funk-Fernsteuerung 25 die Anpressung der Spurkranzräder 23 gelöst und der Elektromotor 46 ebenfalls ferngesteuert für eine weitere Vorfahrt beaufschlagt. Nach Erreichen der gewünschten Distanz zur Gleisstopfmaschine 1 wird der Vorwagen 22 wieder ferngesteuert gestoppt und der Laser-Sender 24 über den Monitor 49 und die Fernsehkamera 26 in der bereits beschriebenen Weise auf den Empfänger 21 eingerichtet.

In dem weiteren, in Fig.4 dargestellten Ausführungsbeispiel sind zwei Laser-Sender 50,51 über jeweils eigene Antriebe 52,53 unabhängig voneinander ferngesteuert um die in Fig. 2 näher beschriebenen Achsen verschwenkbar. Jeder der beiden Laser-Sender 50,51 ist mit einem Zielfernrohr 54,55 verbunden, dem jeweils eine eingene Fernsehkamera 56,57 zugeordnet ist. Auf diese Weise ist der Laser-Sender 50 mit einer in vertikaler Ebene aufgefächerten Laser-Strahl-Ebene genau auf den mit dem Richt-Bezugsystem der Stopfmaschine verbundenen Empfänger einstellbar, während der andere Laser-Sender 51 mit einem in horizontaler Ebene aufgefächerten Laser-Strahl auf einen weiteren, mit dem Nivellier-Bezugsystem verbundenen Empfänger einstellbar ist.

**Patentansprüche**

1. Bezugsystem für Gleisbaumaschinen, insbesondere Gleisstopfmaschinen, zur höhen- und/oder seitenmässigen Steuerung von Arbeitsaggregaten mit einem von der Maschine (1) im Abstand angeordneten und über eine Funk-Fernsteuerung unabhängig (25) verfahrbaren, einen Sender (24) für einen auf die Maschine (1) gerichteten Leitstrahl (29) aufweisenden Vorwagen (22) und mit einem auf der Maschine angeordneten, maschineneigenen Bezugsystem (17), dem ein mit der Maschine verbundener Empfänger 21 für den Leitstrahl zugeordnet, ist, **dadurch gekennzeichnet,** daß am Vorwagen (22) eine Fernsehkamera (26) angeordnet ist und diese sowie der Sender (24) über durch die Funk-Fernsteuerung (25) beaufschlagbare Antriebe (33,36,39,42;52,53) verschwenkbar ausgebildet sind und daß auf der Maschine (1) die Funk-Fernsteuerung (25) und ein mit der Fernsehkamera (26) in Verbindung stehender Monitor (49) vorgesehen sind.

2. Bezugsystem nach Anspruch 1, dadurch gekennzeichnet, daß die Fernsehkamera (26) mit dem am Vorwagen (22) angeordneten und zur Ausstrahlung eines Laser-Strahles (29) ausgebildeten Sender (24) zu einer baulichen Einheit (30) verbunden ist.

3. Bezugsystem nach Anspruch 2, dadurch gekennzeichnet, daß die optischen Achsen (27,28) von Fernsehkamera (26) und Sender (24) parallel zueinander ausgerichtet sind.

4. Bezugsystem nach einem der Ansprüche 2 oder 3, dadurch gekennzeichnet, daß der mit der Fernsehkamera (26) zu einer baulichen Einheit (30) verbundene Sender (24) über wenigstens drei durch die Funk-Fern-

EP 0 424 811 B1

steuerung (25) unabhängig voneinander beaufschlagbare Antriebe (33,36,39) um drei zueinander jeweils etwa senkrechte Achsen (34,37,40) verschwenkbar ausgebildet ist.

5. Bezugssystem nach einem der Ansprüche 1 bis 4, dadurch gekennzeichnet, daß die durch Sender (24) und Fernsehkamera (26) gebildete und mit den Schwenk-Antrieben (33,36,39) verbundene bauliche Einheit (30) auf einem Schlitten (41) gelagert ist, der durch einen fernsteuerbaren Antrieb (42) auf quer zur Gleislängsrichtung verlaufenden Führungen (43) verschiebbar ist.

6. Bezugssystem nach einem der Ansprüche 1 bis 5, dadurch gekennzeichnet, daß die Fernsehkamera (56,57) in Blickrichtung vor einem mit dem Sender (50,51) verbundenen Zielfernrohr (54,55) angeordnet ist.

7. Bezugssystem nach einem der Ansprüche 1 bis 6, dadurch gekennzeichnet, daß zwei Sender (50,51) mit jeweils einer eigenen Fernsehkamera (56,57) am Vorwagen (22) angeordnet sind, wobei die Sender (50,51) mitsamt den zugeordneten Fernsehkameras (56,57) mittels eigener, über die Funk-Fernsteuerung (25) beaufschlagbarer Antriebe (52,53) unabhängig voneinander verschwenkbar ausgebildet sind.

## Claims

1. A reference system for railway track machines, in particular track tamping machines, for the vertical and/or lateral control of working units, with a leading car (22) located at a distance from the machine (1) and independently movable via a radio remote control system (25) and having a transmitter (24) for a guide beam (29) aimed at the machine (1), and with a machine-specific reference system (17) which is arranged on the machine and with which is associated a guide beam receiver (21) connected to the machine, **characterised in that** a television camera (26) is arranged on the leading car (22) and both this television camera and the transmitter (24) are designed so as to be tiltable via drive mechanisms (33, 36, 39, 42; 52, 53) which can be acted upon by means of the radio remote control system (25), and in that the radio remote control system (25) and a monitor (49) communicating with the television camera (26) are provided on the machine (1).

2. A reference system according to claim 1, characterised in that the television camera (26) is connected to the transmitter (24) to form a structural unit (30), the said transmitter being arranged on the leading car (22) and designed to emit a laser beam (29).

3. A reference system according to claim 2, characterised in that the optical axes (27, 28) of the television camera (26) and transmitter (24) are aligned so as to be parallel to each other.

4. A reference system according to either one of claims 2 or 3, characterised in that the transmitter (24), which is connected to the television camera (26) to form a structural unit (30), is designed so as to be tiltable about three axes (34, 37, 40), approximately perpendicular to each other, via at least three drive mechanisms (33, 36, 39) which can be acted upon independently of each other by means of the radio remote control system (25).

5. A reference system according to any one of claims 1 to 4, characterised in that the structural unit (30), which is formed by the transmitter (24) and television camera (26) and connected to the tilting drive mechanisms (33, 36, 39), is mounted on a slide (41) which can be displaced on guides (43) extending transversely to the longitudinal direction of the track by a remote control drive mechanism (42).

6. A reference system according to any one of claims 1 to 5, characterised in that the television camera (56, 57) is arranged in the direction of view in front of a telescopic sight (54, 55) connected to the transmitter (50, 51).

7. A reference system according to any one of claims 1 to 6, characterised in that two transmitters (50, 51) are arranged on the leading car (22), each with its own television camera (56, 57), the transmitters (50, 51), together with the associated television cameras (56, 57), being designed so as to be tiltable independently of each other by means of individual drive mechanisms (52, 53) which can be acted upon via the radio remote control system (25).

## Revendications

1. Système de référence pour des machines de construction de voie, en particulier des machine de bourrage de voie ferrée, pour la commande en hauteur et/ou de côté d'appareils ou ensembles de travail, comprenant un wagon avant (22) disposé à distance de la machine (1) et pouvant être déplacé par roulement, indépendamment, par l'intermédiaire d'une commande à distance par radio (25), et présentant un émetteur (24) pour un rayon conducteur (29) dirigé sur la machine (1), ainsi qu'un système de référence (17) propre à la machine et disposé sur la machine, auquel est associé un récepteur (21) relié à la machine, **caractérisé en ce qu'**une caméra de télévision (26) est montée sur la voiture ou wagon avant (22), et en ce que celle-ci ainsi que l'émetteur (24) sont réalisés de manière pivotante par l'intermédiaire de dispositifs d'entraînement (33,36,39,42;52,53) pouvant être commandés par l'intermédiaire de la commande à distance par radio, et en ce que sont prévus, sur la machine (1), la commande à distance par radio (25) ainsi qu'un dispositif de contrôle (49) en liaison avec la caméra de télévision (26).

2. Sytème de référence selon la revendication 1, caracterisé en ce que la caméra de télévision (26) est reliée, pour former une unité de construction (30), à l'émetteur (24) réalisé pour le rayonnement d'un rayon laser (29) et disposé au wagon avant (22).

3. Système de référence selon la revendication 2, caractérisé en ce que les axes optiques (27,28) de la caméra de télévision (26) et de l'émetteur (24) soient orientés de façon parallèle l'un à l'autre.

4. Système de référence selon l'une des revendications 2 ou 3, caractérisé en ce que l'émetteur (24) relié à la caméra de télévision (26) pour former une unité de construction (30) est réalisé de façon à pouvoir pivoter autour de trois axes (34,37,40), respectivement, à peu près perpendiculaires les uns aux autres, par l'intermédiaire d'au moins trois dispositifs d'entraînement (33,36,39) pouvant être commandés indépendamment les uns des autres par la commande à distance par radio.

5. Système de référence selon l'une des revendications 1 à 4, caractérisé en ce que l'unité de construction (30) constituée par l'émetteur (24) et la caméra de télévision (26) et reliée au dispositif d'entraînement pivotant (33,36,39) est placée sur un chariot (41) pouvant être déplacé par l'intermédiaire d'un dispositif d'entraînement pouvant être commandé à distance (42) sur des guidages (43) s'étendant transversalement à la direction longitudinale de la voie ferrée.

6. Système de référence selon l'une des revendications 1 à 5, caractérisé en ce que la caméra de télévision (56,57) est disposée, dans la direction de visée, devant une lunette de visée (54,55) reliée à l'émetteur (50,51).

7. Système de référence selon l'une des revendications 1 à 6, caractérisé en ce que deux émetteurs (50,51) possédant chacun une caméra de télévision propre (56,57) sont montés sur le wagon avant (22), les émetteurs (50,51) avec les caméras de télévision associés (56,57) sont réalisés de façon à pouvoir être pivotés indépendamment l'un de l'autre, par l'intermédiaire de dispositifs d'entraînement (52,53) pouvant être commandés par la commande à distance par radio (25).

Fig. 1

Fig. 2

Fig. 3

Fig. 4